# EUROPEAN PATENT SPECIFICATION

(11) **EP 2 438 773 B1**
(45) Date of publication and mention of the grant of the patent: **12.08.2015**
(21) Application number: 09779624.7
(22) Date of filing: 03.06.2009
(51) Int. Cl.: H04W 8/06, H04W 80/04, H04W 12/08

(54) **OPERATOR CONTROL OF RESOURCES FOR ROAMING SUBSCRIBERS**
BETREIBERSTEUERUNG VON BETRIEBSMITTELN FÜR ROAMENDE TEILNEHMER
COMMANDE OPÉRATEUR DES RESSOURCES POUR ABONNÉS ITINÉRANTS

(43) Date of publication of application: 11.04.2012
(73) Proprietor: Telefonaktiebolaget L M Ericsson (publ), 164 83 Stockholm (SE)
(72) Inventor: KOPPLIN, Dirk, S-442 54 Ytterby (SE)
(74) Representative: Ericsson
(86) International application number: PCT/EP2009/056808
(87) International publication number: WO 2010/139360

(56) References cited:
- "3rd Generation Partnership Project; Technical Specification Group Services and System Aspects; Policy and charging control architecture (Release 8)"[Online] 1 March 2009 (2009-03-01), XP002549673 Retrieved from the Internet: URL:http://www.3gpp.org/ftp/Specs/html-inf o/23203.htm> [retrieved on 2009-10-08]
- "3rd Generation Partnership Project; Technical Specification Group Services and System Aspects; General Packet Radio Service (GPRS) enhancements for Evolved Universal Terrestrial Radio Access Network (E-UTRAN) access (Release 8)"[Online] 1 March 2009 (2009-03-01), XP002549674 Retrieved from the Internet: URL:http://www.3gpp.org/ftp/specs/html-inf o/23401.htm> [retrieved on 2009-10-08]
- "3rd Generation Partnership Project; Technical Specification Group Services and System Aspects; Architecture enhancements for non-3GPP accesses (Release 8)"[Online] 1 March 2009 (2009-03-01), XP002549675 Retrieved from the Internet: URL:http://www.3gpp.org/ftp/Specs/html-inf o/23402.htm> [retrieved on 2009-10-08]

## Description

### TECHNICAL FIELD

The present invention relates to a solution for handling roaming subscribers and in particular for handling operator specific policies.

### BACKGROUND

Simple and cost efficient means for providing and controlling Quality of Service (QoS) are important for wireless operators. This has been one of the main drivers behind the evolution of the QoS architecture in Evolved Packet System (EPS). EPS is designed for leverage of services from different providers and over different access types to mobile terminals.

One of the main goals for operator control is that he can control subscribers in their use of network resources. This is crucial not at least with the introduction of mobile broadband where resource control becomes important. While policy control is a built in feature in the home operator's network, there is lack of functionality in the visited operator's network to achieve the same level of functionality. The currently known network architecture, e.g. as seen in 3GPP Rel-8 model, give full control over services and subscribers to the home operator, while the visited operator lacks this tools. It is fair to argue that the same level of control needs to be available to visited operators as the visited subscriber uses resources in the visited network. With Rel-8 network architecture home operators can rule over resources in the visited network. In order to give control and the necessary tools to the network owner changes to the defined architecture are needed.

The main problems network owner face with visited subscribers in a GTP based EPC is:
- network owner has very limited control over visited subscriber using it's network resources
- there is no support for differentiated handling of roaming agreements (e.g.
   operator A is allowed to use QCI 1, 2, 4, 8, 9 while operator B is only allowed to use QCI 1, 2 in operator C network)
- there is no support for dynamic control over resource usage (visited subscriber runs traffic, which the network owner wants to stop)

This means the network owner has very limited control over resource usage by visited subscribers (only the RAN can limit the usage based on cell resources). All other kind of control is in the hand of the home operators. It may be questioned how much home operators are concerned over resource usage in the competitors network.

Rel-8 architecture defines a model where the home operators have full control over requested and used network resources. From an operator to operator business perspective the current architecture doesn't fulfill the basic needs for controlling the network operators own resources.

3GPP TS 23.203 V8.5.0 describes a Policy and charging control architecture. In Gateway Control Session Establishment during Attach, the communication is made with the Home PCRF, even when roaming the Visited PCRF is used as a middle man (proxy) only. The BBERF communicates with the home PCRF for authentication and home operator specific policies via the visited PCRF.

### SUMMARY

It is therefore an object of the present invention to provide solutions that mitigates at least some of the aforementioned problems.

The present invention enhances the Evolved Packet Core (EPC) architecture and adds functionality enabling full control over visited subscribers by a network owner. The present invention provides the network owner control over allocation and usage of its network resources. This is achieved by adding policy control functions to a serving gateway (S-GW). This S-GW is the first node visited traffic passes, thus the entity in the network that may intercept bearer signalling and control resource usage. In the basic scenario all functionality to control visiting subscribers may be added to the S-GW and locally handled in the S-GW. This would require configuration of roaming agreements in the S-GW and enforcement of policies. Based on UE identity, e.g. IMSI analysis, or Packet Data Network Gateway (P-GW) address the S-GW may apply policy ruoles for a particular roaming partner. The policies apply on both control plane during bearer establishment e.g. reject bearer procedure and user plane e.g. block services, limit bandwidth.

In a more advanced network the basic architecture may be extended with a Policy and Charging Rules Function entity (PCRF) connected to the S-GW. Instead of having the roaming agreements handled locally in the S-GW they may be handled in the PCRF. That way one may take advantage of Policy and Charging Control (PCC) functionally and policy infrastructure e.g. PCRF, Subscription Profile Repository (SPR), and other policy and charging features.

Information sent between the S-GW and PCRF only concerns visited subscribers. In contrast, home routed subscribers are already terminated in either PCRF or P-GW. Examples of the data that may be used by the PCRF are QoS parameters, bandwidth usage, packet filters and/or Public Land Mobile Network (PLMN) related data. The PCRF may link the data to the pre-configured rules for the roaming partner. By capturing the data and make it available to the policy control the network owner gains control over visited subscribers and may enforce roaming agreements on a fine grade level (QoS class identifier (QCI), bitrates, service access, etc). It gives the level of functionality to network owners needed to protect their resources from unwanted usage and enforces business related action on subscribers from its competitors.

This is provided in a number of aspects according to the present invention, in which a first is a method in a serving gateway, for handling visited subscribers in a wireless communication network according to independent claim 1.

Another aspect of the present invention is provided, an infrastructure node in a wireless visited communication network according to independent claim 8. Embodiments of the method and node are defined in the dependent claims.

The architecture according to the present invention thus allows network owners to gain control over visited subscribers. It gives full control over requested and used network resources to the network owner, which is not possible in the known architecture.

In summary, the present invention:
- adds a key mechanism to give full control over resource (bearer) request to network owners
- adds a key mechanism to give full control over used network resources (bandwidth) to network owners
- allows the network owner to enforce business relationships between PLMN's
- allows the network owner to differentiate between roaming partners e.g. tightly connected or competitors.

These and other aspects of the invention will be apparent from and elucidated with reference to the embodiments described hereinafter.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically a network according to the present invention;
Fig. 2 illustrates schematically a simplified network according to the present invention;
Fig. 3 illustrates schematically a device according to the present invention;
Fig. 4 illustrates schematically a method according to the present invention; and
Fig. 5 illustrates schematically a signaling method according to the present invention.

### DETAILED DESCRIPTION OF PREFERRED EMBODIMENTS

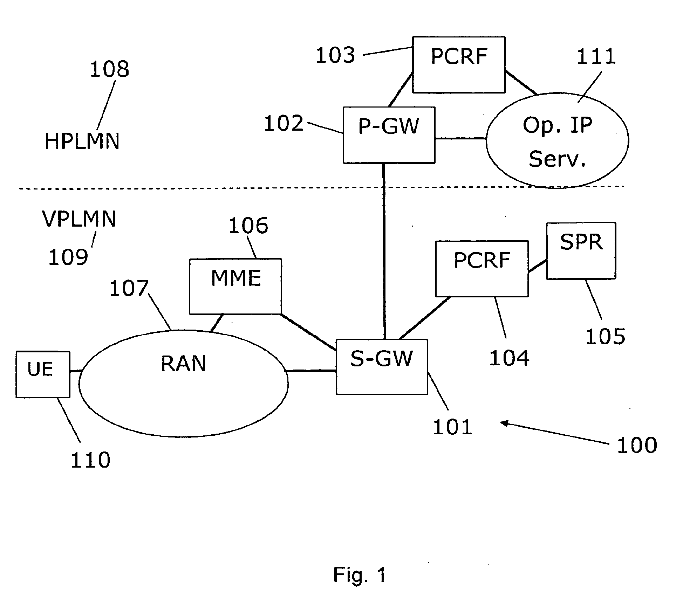

In Fig. 1 reference numeral 100 generally indicate a network architecture according to the present invention. The network comprises a Serving Gateway (S-GW) 101 in communication with a Radio Access Network (RAN) 107 in turn in wireless communication with a User Equipment 110 (UE). For control signalling purposes a Mobility Management Entity (MME) 106 is part of the network. Furthermore, a Policy and Charging Rules Function 104 (PCRF) is connected to the S-GW and in turn optionally a Subscription Profile Repository (SPR) 105 may be connected to the PCRF.

In this example the UE 110 belongs to an operator not in charge of the network 100 the UE is connected to, thus the network is to be considered as a Visited Public Land Mobile Network 109 (VPLMN) and the UE belongs to a Home PLMN 108 (HPLMN). In the HPLMN a Packet Data Network Gateway 102 (P-GW) is in charge of handling control signaling and connectivity issues for the UE. A PCRF 103 is connected to the P-GW in order to handle authentication and policy and charging issues in the HPLMN. Furthermore, the P-GW acts as a gateway to Operator offered IP services.

The S-GW of the VPLMN is in communication with the P-GW in the HPLMN.

The UE communicates wirelessly with a radio access network node, e.g. an eNodeB using any suitable radio communication mode/protocol, for instance by using transmitting data on a modulated carrier signal which may be demodulated at a receiving side.

The core of the invention is to add policy control functionality to the visited network for a UE of another operator. The Serving Gateway S-GW may identify control plane signalling (e.g. bearer signalling) coming from other PLMN's. The S-GW may be arranged to identify a home network by analysing call flow. Examples of parameters that may be used for home network identification are UE or user identification data, e.g. International Mobile Subscriber Identity (IMSI), or a P-GW address, e.g. an IP or Domain Name Server (DNS) address of the P-GW.

In this enhanced scenario, if the subscriber is identified as visited, the S-GW may relay necessary parameters (typically QoS parameters) to the PCRF for authorization. The PCRF has access to roaming related data (e.g. via the SPR) allowing differentiated handling of roaming partners. For example, operators with tight business relation to the visited network operator may be handled differently from competitors to the visited network operator. The architecture is open in that respect that it does not limit the options the network operator have in differentiation of business relations. The PCRF decides on roaming policies for how the visited subscriber is to be handled. Details on the roaming policies are not further defined here, but the system may support PCRF internal and external access to information sources. The main target for policy decision is normally QoS related actions but other policies may be applicable, e.g. service connectivity or rejection, or bandwidth provisions. Example of policy decisions are change of bit rates (local AMBR) or reject of QCI for the visited subscriber. The authorized parameters are sent from the PCRF to the S-GW. The S-GW applies the authorized parameters to the policy enforcement function. Different services may be affected by the policy rules, such as for instance web browsing, streaming media, broadcasting media, email, gaming, video conferencing, IP telephony, voice, file transfer, and geographical positioning.

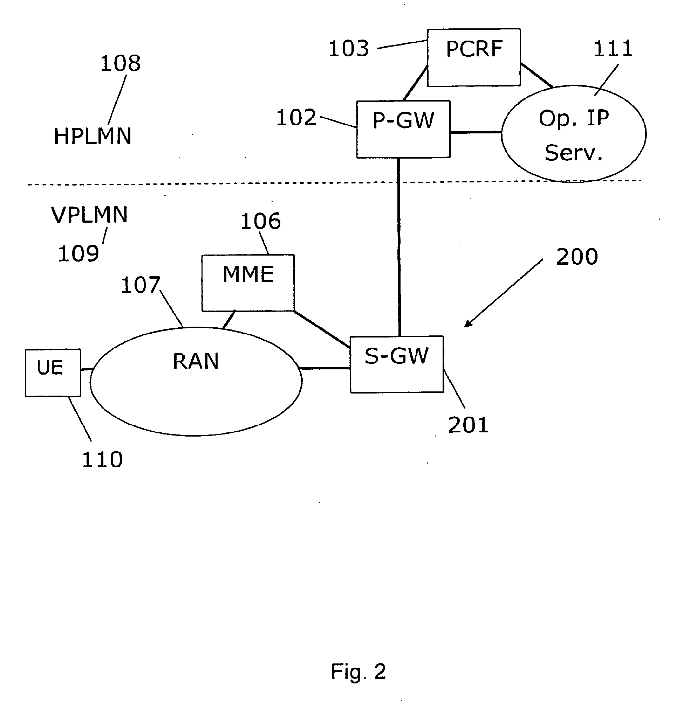

The connection to the PCRF 104 is optional and in another embodiment illustrated in Fig. 2, the S-GW 201 handles these operator specific policies internally for the visited network 200. Fig. 2 illustrates a basic scenario without the separate PCRF. In the basic scenario all handling is done locally in the S-GW using static configuration for each operator, i.e. roaming agreements are configured locally. If the subscriber is identified as visited, e.g. by IMSI or P-GW address, the S-GW validates the bearer request against pre-configured rules for that roaming partner. The outcome of the validation may result in a bearer activation rejected, e.g. if a certain QCI not allowed, bitrates too high, or service not supported. If the request is accepted the S-GW activates the traffic rules for the roaming partner and proceeds with the bearer activation. Traffic conforming to the installed rules may now pass via the visited network.

It should be noted and appreciated by the skilled person that in Figs 1 and 2 only logical/physical entities important for the understanding of the present invention are shown, whereas physical routers and switches may be present to build up the infrastructure network; however, these network building entities are not within the scope of the present invention and generally understood by the skilled person.

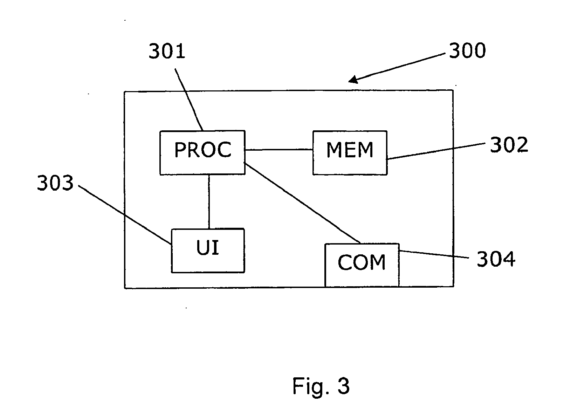

The main functions of the present invention are executed in the serving gateway S-GW 101, 201. The S-GW may comprise a processing device 300 as seen in Fig. 3 and it may comprise a processing unit 301, at least one memory unit 302 and at least one communication interface 304. Optionally, the processing device may also comprise a user interface 303 for installation and maintenance purposes. The processing unit is arranged to execute instruction sets, software or hardware instruction sets, and may comprise any suitable computational unit, such as a microprocessor, Digital Signal Processor (DSP), Field Programmable Gate Array (FPGA), or Application Specific Integrated Circuit (ASIC). Furthermore, the memory unit may comprise a volatile and/or non-volatile memory device, such as a RAM, ROM, EEPROM, Hard disk, Flash memory, or similar. The communication interface is arranged to communicate using a packet based communication protocol, such as using the Internet Protocol (IP) and may use Ethernet or similar MAC layer communication protocols.

When a UE desired to set up a bearer in a visited network, a signal is transmitted to the P-GW of the home network which in turn transmits a bearer request to the S-GW of the visited network. PCRF data may be transmitted on this bearer request from the P-GW to the S-GW which in turn may use it internally or relay this information to the PCRF and/or further to the SPR. PCRF data may comprise bit rate, filter characteristics, QoS, or similar communication related information.

In the enhanced scenario, the S-GW may dynamically control the resource allocations for a UE or for customers to different operators. For instance it may be of interest to provide more resources and better quality to preferred partners and reduced resources and quality to competitor's customers. The resource allocations may be controlled dynamically and thus changed over time as the resource availability changes. Thus, the network operator receiving visited users may control the resources locally instead of depending on the home network operator for each user.

The enhanced scenario may also be dynamically controlled on a time or event basis, i.e. during certain time of day different operators may acquire different quality of service or service access; similarly different events in the network may also be used for deciding on what QoS or service types that is available for operators. This adds significant levels of flexibility to the network configuration and resource allocation of the visited network.

The architecture of the present invention supports enforcement of a local Aggregate Maximum Bit Rate (AMBR) in the S-GW. The local AMBR need not be signalled to any other node outside the visited network, but define an upper limit of bandwidth the visited subscriber is allowed to use in the visited network. By this, network owners may restrict the used bandwidth locally in the S-GW. It doesn't require any interaction with Mobility Management Entity (MME) or P-GW but may be handled locally in the S-GW. Since AMBR defines the upper limit of bandwidth usage there is no restriction on the lower limit. The network owner may thus put rules into place for local enforcement of AMBR, which differs from the rules provided in the home network.

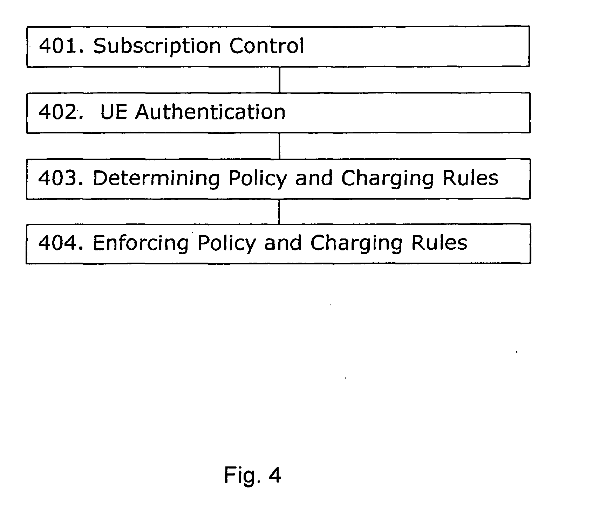

Fig. 4 illustrates a method according to the present invention, comprising steps of:
401. Controlling attaching UE for visited or home subscriber. This may be performed as discussed above using analysis of IMSI or P-GW address for the UE.
402. Authenticating the UE using appropriate protocol methods using locally stored policy and charging control information for roaming operators.
403. Determining policy and charging rules for the UE based on the home operator of the UE - using a database with rules for roaming operators. This database may be stored locally in the S-GW or stored separately, for instance in relation to a separate PCRF entity as discussed above for the enhanced scenario.
404. Enforcing the policy and charging rules in the S-GW, e.g. rejecting or accepting the UE. Accepting the UE may be with modified QoS as discussed earlier in this document.

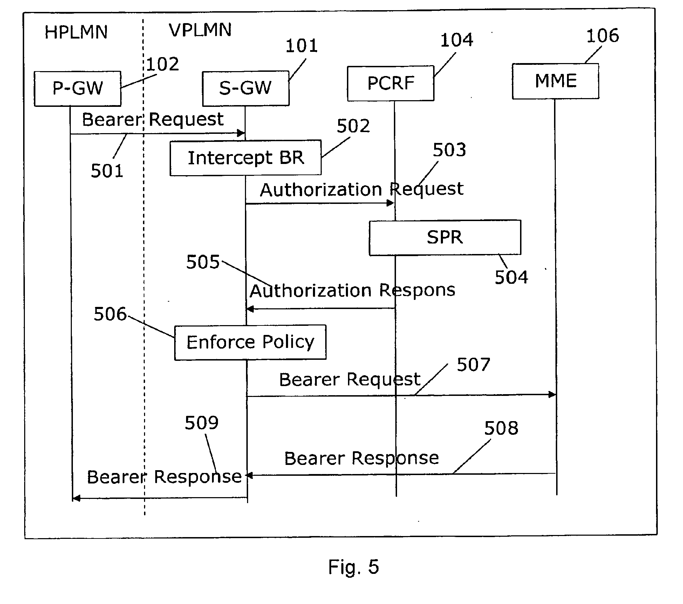

Fig. 5 shows in more detail a bearer request call flow in the enhanced scenario with interception for visited subscriber requests:
501. Bearer request is sent to the S-GW 101 of the visited network from the P-GW 102 of a home network of the UE.
502. S-GW analyses the source of the request by inspecting the bearer request:
   a. if home subscriber= no action
   b. if visited subscriber = relay to PCRF 104 for authorization
503. PCRF makes an authorization of the request:
   a. PCRF performs an authorization based on roaming operator specific policies: the decision may be accept, deny, or modify bearer configuration, e.g. QoS, service accessibility, bit rate, AMBR, and so on
504. The PRCF may communicate with the SPR in the authorization procedure. The SPR may keep a database with roaming operator specific information related to the PCRF authorization process.
505. PCRF sends en authorization response message to the S-GW:
   a. If modify: QoS or other bearer configuration parameters need to be provisioned with the message
506. S-GW node enforces authorization response and installs policy rules:
   a. accept= continue call flow to next node
   b. deny =reject call flow back to P-GW
   c. modify = start modification procedure
507. S-GW continues in the call flow by transmitting a bearer request to the MME 106
508. MME responses to S-GW with a bearer response.
509. S-GW responses to P-GW with a bearer response.

By the solution according to the present invention, it is possible to gain local control over several different types of problems and/or features for a visiting UE, the following use cases are addressed:
1. control over resource allocation (Guaranteed Bit Rate (GBR) and non-GBR bearers)
2. control over resources usage (typically bearers under AMBR control)
3. roaming partner differentiation (typically differentiate on QCI's or services or bit rates)
4. local enforcement of AMBR (AMBR is enforced in e.g. S-GW) instead of relying on home operator policy enforcement.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### Abbreviations

- DB: Database
- EPC: Evolved Packet Core
- EPS: Evolved Packet System
- PCRF: Policy and Charging Rules Function
- PDN: Packet Data Network
- PDP: Packet Data Protocol
- P-GW: Packet data network Gateway
- RAN: Radio Access Network
- SGSN: Serving GPRS Support Node
- S-GW: Serving Gateway
- SPR: Subscription Profile Repository

### References

3GPP TS 23.401 "GPRS enhancements for E-UTRAN access"
3GPP TS 23.203 "Policy and Charging Control Architecture"

## Claims

1. A method in a serving gateway (101, 201, 300), for handling visited subscribers in a visited communication network (109) with wireless access for user equipment, i.e. UE (110), comprising the steps of:
- receiving a bearer set up request for the UE subscribing for access from a home communication network (108);
- analysing the source of the request;
**characterized in that** the method further comprises the steps of:
- obtaining from a policy and charging rules function in the visited communication network, authentication of the UE based on roaming operator specific policies in the visited communication network;
- obtaining policy rules, from a function in the visited communication network, relating to the roaming operator specific policies;
- authenticating the UE using locally stored policy and charging control information for roaming operators;
- enforcing roaming operator specific policy rules;
- transmitting the policy rules to other entities in the visited communication network; and
- transmitting a bearer set up response to a Packet Data Network Gateway (102) in the home communication network.

2. The method according to claim 1, further comprising a step of transmitting an authentication request to a policy and charging rules function entity, i.e. PCRF, located in the visited communication network.

3. The method according to claim 2, further comprising a step of communicating from the PCRF a request for obtaining information about roaming operator specific policies to a database located in the visited communication network.

4. The method according to claim 1, further comprising a step of obtaining in the bearer request information relating to at least one of QoS, UE Identity, and cell related information.

5. The method according to claim 1, wherein the policy rules comprise at least one of block a service, limit communication bandwidth, and reject connection.

6. The method according to claim 5, wherein the service is at least one of web browsing, streaming media, broadcasting media, email, gaming, video conferencing, IP telephony, voice, file transfer, and geographical positioning.

7. The method according to claim 1, wherein the policy rule is related to an aggregate maximum bit rate, i.e. AMBR, which is controlled locally by the serving gateway.

8. An infrastructure node (101, 201, 300) in a wireless visited communication network (109), comprising:
- a processor (301);
- a memory (302);
- a communication interface (304);
wherein the processor is arranged to execute instruction sets stored in the memory for:
- receiving a bearer request for a visiting user equipment (110), UE;
- analysing the source of the request;
**characterized in that** the processor is further arranged execute instruction sets stored
in the memory for:
- obtaining from a local policy and charging rules function in the visited communication network (109), authentication of the UE based on roaming operator specific policies in the visited communication network;
- obtaining policy rules relating to the roaming operator specific policies;
- authenticating the UE using locally stored policy and charging control information for roaming operators;
- enforcing policy rules;
- transmitting the policy rules to other entities in the visited communication network; and
- transmitting a response to a Packet Data Network Gateway (102) in a home communication network (108).

9. The node according to claim 8, wherein the processor is further arranged to communicate with a policy and charging rules function entity (104) for receiving UE operator specific rules.

## Patentansprüche

1. Verfahren in einem Serving-Gateway (101, 201, 300) zur Behandlung von Gastteilnehmern in einem besuchten Kommunikationsnetz (109) mit drahtlosem Zugriff für eine Benutzereinuchtung, d.h. UE (110), umfassend die folgenden Schritte:
- Empfangen einer Trägereinrichtungsanforderung für die UE, die am Zugriff teilzunehmen wünscht, von einem Heimatkommunikationsnetz (108);
- Analysieren der Quelle der Anforderung;
**dadurch gekennzeichnet, dass** das Verfahren ferner die folgenden Schritte umfasst:
- Erhalten einer Authentifizierung der UE von einer Grundsatz- and Gebührenabrechnungsfunktion im besuchten Kommunikationsnetz, basierend auf spezifischen Roaming-Betreibergrundsätzen im besuchten Kommunikationsnetz;
- Erhalten von Grundsatzregeln von einer Funktion im besuchten Kommunikationsnetz bezüglich der spezifischen Roaming-Betreibergrundsätze;
- Authentifizieren der UE mittels einer lokal gespeicherten Grundsatz- und Gebührenabrechnungskontrollinformation für Roaming-Betreiber;
- Durchsetzen von spezifischen Roaming-Betreibergrundsatzregeln;
- Übertragen der Grundsatzregeln an andere Instanzen im besuchten Kommunikationsnetz; und
- Übertragen einer Trägereinrichtungsantwort an ein Paketdatennetz-Gateway (102) im Heimatkommunikationsnetz.

2. Verfahren nach Anspruch 1, ferner mit einem folgenden Schritt: Übertragen einer Authentifizierungsanforderung an eine Grundsatz- and Gebührenabrechnungsregeln-Funktionsinstanz, d.h. PCRF, im besuchten Kommunikationsnetz.

3. Verfahren nach Anspruch 2, ferner umfassend einen folgenden Schritt: Übermitteln einer Anforderung zum Erhalt von Information von der PCRF über spezifische Roaming-Betreibergrundsätze an eine Datenbank, die sich im besuchten Kommunikationsnetz befindet.

4. Verfahren nach Anspruch 1, ferner umfassend einen folgenden Schritt: Erhalten von Information in der Trägeranforderung in Bezug auf mindestens eines von Folgendem: QoS, UE-Kennung und zellenbezogene Information.

5. Verfahren nach Anspruch 1, wobei die Grundsatzregeln zumindest eines von Folgendem umfassen: Dienstblockierung, Kommunikationsgrenzbandbreite und Verbindungsabweisung.

6. Verfahren nach Anspruch 5, wobei der Dienst zumindest eines von Folgendem ist: Web-Browsing, Medienstrom, Medienrundsendung, E-Mail, Spiele, Videokonferenzen, IP-Telefonie, Sprache, Dateiübertragung und geografische Positionsbestimmung.

7. Verfahren nach Anspruch 1, wobei die Grundsatzregel sich auf eine maximale Gesamtbitrate, d.h. AMBR, bezieht, die durch das Serving-Gateway lokal gesteuert wird.

8. Infrastrukturknoten (101, 201, 300) in einem drahtlosen besuchten Kommunikationsnetz (109), umfassend:
- einen Prozessor (301);
- einen Speicher (302);
- eine Kommunikationsschnittstelle (304);
wobei der Prozessor dafür eingerichtet ist, im Speicher gespeicherte Anweisungssätze auszuführen zum:
- Empfangen einer Trägeranforderung für eine Gastbenutzereinrichtung (110), UE;
- Analysieren der Quelle der Anforderung;
**dadurch gekennzeichnet, dass** der Prozessor ferner dafür eingerichtet ist, im Speicher gespeicherte Anweisungssätze auszuführen zum:
- Erhalten einer Authentifizierung der UE von einer lokalen Grundsatz- and Gebührenabrechnungsregeln-Funktion im besuchten Kommunikationsnetz (109) basierend auf spezifischen Roaming-Betreibergrundsätzen im besuchten Kommunikationsnetz;
- Erhalten von Grundsatzregeln bezüglich der spezifischen Roaming-Betreibergrundsätze;
- Authentifizieren der UE mittels einer lokal gespeicherten Grundsatz- und Gebührenabrechnungskontrollinformation für Roaming-Betreiber;
- Durchsetzen von Grundsatzregeln;
- Übertragen der Grundsatzregeln an andere Instanzen im besuchten Kommunikationsnetz; und
- Übertragen einer Antwort an ein Paketdatennetz-Gateway (102) im Heimatkommunikationsnetz (108).

9. Knoten nach Anspruch 8, wobei der Prozessor ferner dafür eingerichtet ist, mit einer Grundsatz- and Gebührenabrechnungsregeln-Funktionsinstanz (104) zum Empfangen spezifischer UE-Betreiberregeln zu kommunizieren.

## Revendications

1. Procédé mis en oeuvre dans une passerelle de desserte (101, 201, 300), pour gérer des abonnés visités dans un réseau de communication visité (109) avec un accès sans fil pour un équipement d'utilisateur, UE, (110), comprenant les étapes ci-dessous consistant à :
- recevoir une demande d'établissement de porteuse pour l'équipement UE s'abonnant en vue d'un accès à partir d'un réseau de communication domestique (108) ;
- analyser la source de la demande ;
**caractérisé en ce que** le procédé comprend en outre les étapes ci-dessous consistant à :
- obtenir à partir d'une fonction de règles de facturation et de politique dans le réseau de communication visité, une authentification de l'équipement UE, sur la base de politiques spécifiques aux opérateurs itinérants dans le réseau de communication visité ;
- obtenir des règles de politique, à partir d'une fonction dans le réseau de communication visité, connexes aux politiques spécifiques aux opérateurs itinérants ;
- authentifier l'équipement UE en utilisant des informations de commande de facturation et de politique stockées localement pour les opérateurs itinérants ;
- appliquer les règles de politiques spécifiques aux opérateurs itinérants ;
- transmettre les règles de politique à d'autres entités dans le réseau de communication visité ; et
- transmettre une réponse d'établissement de porteuse à une passerelle de réseau de données en paquets (102) dans le réseau de communication domestique.

2. Procédé selon la revendication 1, comprenant en outre une étape de transmission d'une demande d'authentification à une entité de fonction de règles de facturation et de politique, PCRF, située dans le réseau de communication visité.

3. Procédé selon la revendication 2, comprenant en outre une étape de communication, à partir de la fonction PCRF, d'une demande visant à obtenir des informations connexes à des politiques spécifiques aux opérateurs itinérants, à une base de données située dans le réseau de communication visité.

4. Procédé selon la revendication 1, comprenant en outre une étape d'obtention, dans la demande de porteuse, d'informations connexes à au moins l'une parmi une qualité QoS, une identité d'équipement UE, et des informations connexes aux cellules.

5. Procédé selon la revendication 1, dans lequel les règles de politique comprennent au moins l'un parmi un blocage de service, une limitation de largeur de bande de communication, et un rejet de connexion.

6. Procédé selon la revendication 5, dans lequel le service correspond à au moins l'un des services suivants : une navigation web, une transmission multimédia en continu, une diffusion multimédia, un courriel, des jeux, une visioconférence, de la téléphonie IP, un contenu vocal, un transfert de fichiers, et un positionnement géographique.

7. Procédé selon la revendication 1, dans lequel la règle de politique est connexe à un débit binaire maximum agrégé, AMBR, qui est commandé localement par la passerelle de desserte.

8. Noeud d'infrastructure (101, 201, 300) dans un réseau de communication visité sans fil (109), comprenant :
- un processeur (301) ;
- une mémoire (302) ;
- une interface de communication (304) ;
dans lequel le processeur est agencé de manière à exécuter des ensembles d'instructions stockés dans la mémoire en vue de :
- recevoir une demande de porteuse pour un équipement d'utilisateur visiteur (110), UE ;
- analyser la source de la demande ;
**caractérisé en ce que** le processeur est en outre agencé de manière à exécuter des ensembles d'instructions stockés dans la mémoire en vue de :
- obtenir, à partir d'une fonction de règles de facturation et de politique locale dans le réseau de communication visité (109), une authentification de l'équipement UE, sur la base de politiques spécifiques aux opérateurs itinérants dans le réseau de communication visité ;
- obtenir des règles de politique connexes aux politiques spécifiques aux opérateurs itinérants ;
- authentifier l'équipement UE en utilisant des informations de commande de facturation et de politique stockées localement pour les opérateurs itinérants ;
- appliquer les règles de politiques ;
- transmettre les règles de politique à d'autres entités dans le réseau de communication visité ; et
- transmettre une réponse à une passerelle de réseau de données en paquets (102) dans le réseau de communication domestique (108).

9. Noeud selon la revendication 8, dans lequel le processeur est en outre agencé de manière à communiquer avec une entité de fonction de règles de facturation et de politique (104) en vue de recevoir des règles spécifiques aux opérateurs d'équipements UE.
